Europäisches Patentamt

European Patent Office

Office européen des brevets

(19)

(11) Numéro de publication : **0 364 318 B1**

(12) **FASCICULE DE BREVET EUROPEEN**

(45) Date de publication du fascicule du brevet :
22.07.92 Bulletin 92/30

(51) Int. Cl.⁵ : **F16D 25/08,** F16D 25/12,
B60K 17/02

(21) Numéro de dépôt : **89402622.8**

(22) Date de dépôt : **26.09.89**

(54) **Module de couplage pour transmission à quatre roues motrices.**

(30) Priorité : **14.10.88 FR 8813525**

(43) Date de publication de la demande :
**18.04.90 Bulletin 90/16**

(45) Mention de la délivrance du brevet :
**22.07.92 Bulletin 92/30**

(84) Etats contractants désignés :
**DE ES GB IT**

(56) Documents cités :
**FR-A- 2 557 232
FR-A- 2 583 479
US-A- 3 412 834**

(73) Titulaire : **REGIE NATIONALE DES USINES
RENAULT
Boîte postale 103 8-10 avenue Emile Zola
F-92109 Boulogne-Billancourt (FR)**

(72) Inventeur : **Girardi, Philippe
16, rue Albert Molinier
F-95410 Groslay (FR)**
Inventeur : **Ithurria, Jean-Jacques
23, rue de Rivoli
F-75004 Paris (FR)**

(74) Mandataire : **Ernst-Schonberg, Michel et al
REGIE NATIONALE DES USINES RENAULT (S.
0804)
F-92109 Boulogne Billancourt Cedex (FR)**

EP 0 364 318 B1

## Description

La présente invention se rapporte à un module de couplage qui peut se monter notamment sur un carter de boîte de vitesses ou de pont avant ou arrière pour avoir une transmission à quatre roues motrices sur un véhicule automobile.

Il existe des dispositifs de couplage comprenant un embrayage multidisques avec un ensemble de commande (voir par exemple FR-A-2 557 232), qui sont associés à des ponts d'essieu de véhicule automobile avec lesquels ils sont intégrés dans un même carter. Cette intégration présente l'inconvénient de ne pas avoir des fonctions séparées, qui peuvent être réalisées par des constructeurs différents ayant chacun une spécialité. De plus, cette conception oblige à monter pièce à pièce le mécanisme dans la boîte de vitesses ou le pont dans lequel il est intégré.

Enfin, ces dispositifs ne comportent pas à l'intérieur du carter l'ensemble du distributeur hydraulique, ce qui pose des problèmes d'encombrement et de raccordement.

Le but de la présente invention est de proposer un module de couplage complet et indépendant, qui puisse se monter rapidement sur n'importe quel récepteur tel qu'une boîte de vitesses ou un pont d'essieu.

Selon un mode de réalisation de l'invention, le module de couplage notamment pour véhicule automobile à quatre roues motrices, comporte :
  – un mécanisme d'embrayage avec sa commande hydraulique,
  – un système de distribution hydraulique,
  – un circuit d'alimentation relié à une hydraulique extérieure.
  le mécanisme d'embrayage, le système de distribution hydraulique et le circuit d'alimentation étant montés dans un ensemble de carters fermés de manière à former un tout, c'est-à-dire un organe mécanique indépendant qui se monte sur le carter principal de l'organe récepteur.

Le module de couplage, selon l'invention, présente ainsi l'avantage d'être un ensemble séparé qui peut se monter d'un seul bloc ce qui facilite la fabrication en chaîne. De plus, le système de distribution hydraulique est intégré dans le module de couplage, ce qui donne un encombrement réduit et donc une plus grande facilité de mise en place.

D'autres caractéristiques et avantages de la présente invention ressortiront de la description qui suit le mode de réalisation donné à titre d'exemple en référence aux dessins annexés sur lesquels :

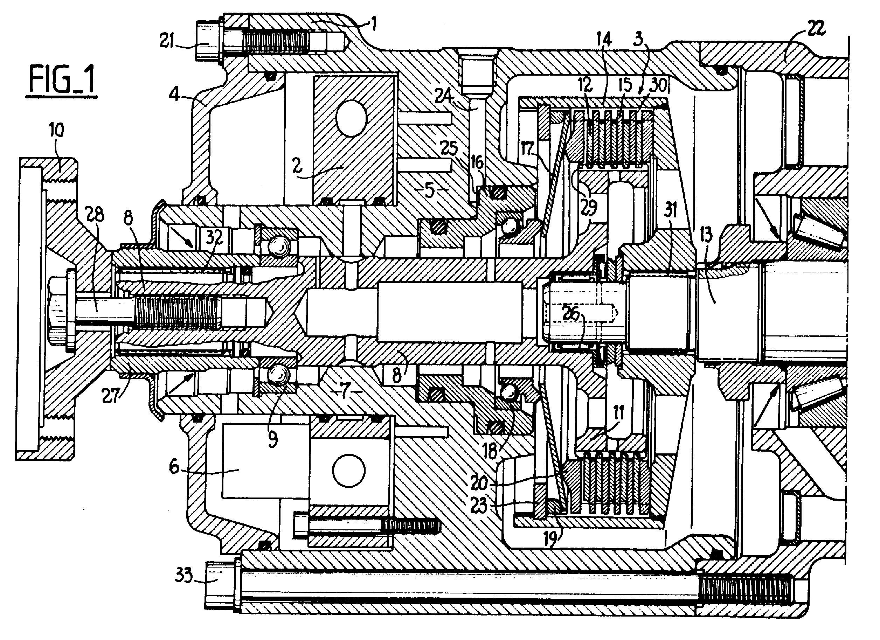

  – la figure 1 est une vue en coupe axiale de l'ensemble du module de couplage selon l'invention.

Le module de couplage, selon l'invention, s'applique notamment aux transmissions à quatre roues motrices des véhicules automobiles. Le module de couplage comprend :
  – un mécanisme d'embrayage 3 avec sa commande hydraulique agissant sur un diaphragme,
  – un système de distribution hydraulique 2,
  – un circuit d'alimentation qui est relié à une pompe hydraulique extérieure non représentée sur la figure 1.

Le mécanisme d'embrayage 3, le système de distribution hydraulique 2 et le circuit d'alimentation sont montés dans un ensemble de carters comprenant un carter cylindrique 1 et un couvercle 4. Ces carters forment ainsi un tout, c'est-à-dire un organe mécanique indépendant, qui se monte sur le carter principal 22 de l'organe récepteur. De plus, le module de couplage ainsi formé comporte un dispositif de contrôle qui a une logique de commande.

Le carter cylindrique 1 a une cloison centrale 5, qui se prolonge par un moyeu 7 du côté de la prise de mouvement. On obtient ainsi un logement entre la paroi extérieure du carter cylindrique 1 et le moyeu 10 dans lequel est disposé le système de distribution hydraulique 2, qui vient se plaquer contre la cloison centrale 5, sur laquelle il est fixé par des vis.

Le mécanisme d'embrayage 3 est disposé de l'autre côté de la cloison centrale 5, et il est solidaire d'un arbre d'entrée 8 qui est supporté par le moyeu 7 au moyen d'un roulement 9. L'arbre d'entrée 8 s'engage dans une bride d'accouplement 10 du côté de la prise de mouvement. Du côté du mécanisme d'embrayage 3, l'arbre d'entrée 8 supporte l'extrémité de l'arbre 13 de l'organe récepteur.

L'ensemble du module de couplage est fermé par un couvercle 4, qui vient se monter sur le carter cylindrique 1. Ce couvercle 4 se centre et se fixe sur le carter cylindrique 1 au moyen de vis 21. Le module de couplage, qui forme un ensemble indépendant, se centre et se fixe sur le carter 22 de l'organe récepteur par l'intermédiaire de vis 33.

Le système de distribution hydraulique est un bloc hydraulique qui comporte un ensemble de tiroirs et de canalisations notamment des électrovannes 6, qui sont connectés par l'intermédiaire d'un circuit imprimé réalisé dans la cloison centrale 5.

Le mécanisme d'embrayage 3 avec sa commande hydraulique est constitué par une cloche 14, qui est solidaire de l'arbre 13 de l'organe récepteur et par un moyeu 11 qui est solidaire de l'arbre d'entrée 8. La cloche 14 est munie de disques 15 qu'elle entraîne en rotation au moyen de cannelures 30. Le moyeu 11 entraîne des disques 12 par l'intermédiaire de cannelures 29. Les disques 12 et 15 s'appliquent les uns sur les autres sous l'action d'un plateau 20, qui est poussé par un piston 16 par l'intermédiaire d'une butée à billes 18 et d'un diaphragme 17. Le piston 16 est monté dans la cloison centrale 5 où une canalisation d'alimentation 24 débouche dans une chambre 25 du piston 16. Le diaphragme 17 prend appui sur une bague extérieure 19 montée dans la cloche 14 et tenue par un circlips 23.

La butée à billes 18 agit sur le diaphragme 17, qui pousse le plateau 20 en prenant appui sur la bague extérieure 19.

L'arbre 13 de l'organe récepteur pénètre dans la cloche 14 et dans le moyeu 11. Des cannelures 31 assurent la solidarisation en rotation entre la cloche 14 et l'arbre 13. L'extrémité de l'arbre 13 est supporté par un roulement à aiguilles 26, qui est disposé dans le moyeu 11.

la bride d'accouplement 10 a un moyeu 27, qui se monte sur l'extrémité de l'arbre d'entrée 8, avec laquelle il est solidaire en rotation par l'intermédiaire de cannelures 32. La bride d'accouplement 10 est bloquée par une vis centrale 28, qui se fixe dans l'extrémité de l'arbre d'entrée 8.

## Revendications

1. Module de couplage notamment pour véhicule automobile à quatre roues motrices, comprenant un mécanisme d'embrayage (3) avec sa commande hydraulique, caractérisé en ce qu'il comporte :
   – un système de distribution hydraulique (2),
   – un circuit d'alimentation relié à une pompe hydraulique extérieure,
le mécanisme d'embrayage (3), le système de distribution hydraulique (2) et le circuit d'alimentation étant montés dans un ensemble de carters (1, 4) fermés de manière à former un tout, c'est-à-dire un organe mécanique indépendant qui se monte sur le carter principal (22) de l'organe récepteur.

2. Module de couplage selon la revendication 1, caractérisé en ce qu'il est constitué d'un carter cylindrique (1) avec une cloison centrale (5) se prolongeant par un moyeu (7) du côté de la prise de mouvement de manière à recevoir entre ledit moyeu (7) et la paroi extérieure du carter cylindrique (1) le système de distribution hydraulique (2), le mécanisme d'embrayage (3) est disposé de l'autre côté de la cloison centrale (5) et est solidaire d'un arbre d'entrée (8) supporté par le moyeu (7) au moyen d'un roulement (9); l'arbre d'entrée (8) recevant, du côté de la prise de mouvement, une bride d'accouplement (10) et supportant, du côté du mécanisme d'embrayage (3), l'extrémité de l'arbre (13) de l'organe récepteur ; l'ensemble du module de couplage est fermé par un couvercle (4) qui se centre et se fixe sur le carter cylindrique (1) à l'aide de vis (21), ledit module de couplage venant se centrer et se fixer sur le carter (22) de l'organe récepteur.

3. Module de couplage selon la revendication 2, caractérisé en ce que le mécanisme d'embrayage (3) avec sa commande hydraulique est constitué par une cloche (14) liée à l'arbre (13) de l'organe récepteur et par un moyeu (11) solidaire de l'arbre d'entrée (8), la cloche (14) et le moyeu (11) ayant respectivement des disques (15) et (12) avec lesquels ils sont liés en rotation au moyen de cannelures (30) et (29) et qui s'appliquent les uns sur les autres par l'intermédiaire d'un plateau (20), d'un diaphragme (17) est d'une butée à billes (18) sur laquelle agit le piston (16) monté dans la cloison centrale (5), le diaphragme (17) prenant appui sur une bague extérieure (19) tenue par un circlips (23) ; une canalisation d'alimentation (24) est réalisée dans la cloison centrale (5) et débouche dans la chambre (25) du piston (16).

4. Module de couplage selon la revendications 3, caractérisé en ce que la cloche (14) reçoit l'arbre (13) de l'organe récepteur avec lequel il est lié par l'intermédiaire de cannelures (31), et en ce que le moyeu (11) supporte l'extrémité dudit arbre (13) au moyen de roulement à aiguilles (26).

5. Module de couplage selon la revendication 2, caractérisé en ce que la bride d'accouplement (10) a un moyeu (27) qui reçoit l'extrémité de l'arbre d'entrée (8) avec laquelle il est lié en rotation par l'intermédiaire de cannelures (32), la bride (10) étant bloquée par une vis centrale (28) se fixant dans ladite extrémité de l'arbre d'entrée (8).

6. Module de couplage selon la revendication 1, caractérisé en ce qu'il comporte un dispositif de contrôle ayant une logique de commande.

## Patentansprüche

1. Kupplungseinheit, insbesondere für Kraftfahrzeuge mit Vierradantrieb, mit einem hydraulisch gesteuerten Kupplungsmechanismus (3), gekennzeichnet durch
   – eine hydraulische Verteileranordnung (2) und
   – eine Zufuhrleitung, die mit einer äußeren Hydraulikpumpe verbunden ist,
wobei der Kupplungsmechanismus (3), die hydraulische Verteileranordnung (2) und die Zufuhrleitung in einer Gehäuseanordnung (1, 4) angeordnet sind, die dergestalt geschlossen ist, daß sie eine Einheit bildet, d.h. ein unabhängiges mechanisches Bauteil, das am Hauptgehäuse (22) des Aufnahmeteils anbringbar ist.

2. Kupplungseinheit nach Anspruch 1, dadurch gekennzeichnet, daß sie aus einem zylindrischen Gehäuse (1) besteht mit einer zentralen Trennwand (5), welche aufnahmeseitig durch eine Nabe (7) verlängert ist zur Aufnahme zwischen der Nabe (7) und der Außenwand des zylindrischen Gehäuses (1) der hydraulischen Verteileranordnung (2), wobei der Kupplungsmechanismus (3) auf der anderen Seite der zentralen Trennwand (5) angeordnet ist und mit einer Eingangswelle (8) fest verbunden ist, welche über ein Kugellager (9) von der Nabe (7) getragen wird; die Eingangswelle (8) nimmt eingangsseitig einen Kupplungsflansch (10) auf und trägt auf der Seite des Kupplungsmechanismus (3) das Ende der Aufnahmewelle (13); die Gesamtheit der Kupplungseinheit wird durch einen Deckel (4) verschlossen, der am zylindrischen Gehäuse (1) zentriert und befestigt ist mit Hilfe einer Schraube (21), wobei sich die Kupplungseinheit am Gehäuse (22) des Aufnahmeteils zentriert und festsetzt.

3. Kupplungseinheit nach Anspruch 2, dadurch gekennzeichnet, daß der Kupplungsmechanismus (3) mit der zugehörigen Hydrauliksteuerung aus einer Glocke (14) besteht, die mit der Welle (13) des Eingangsteils über eine Nabe (11) verbunden ist, welche mit der Eingangswelle (8) verbunden ist, wobei die Glocke (14) und die Nabe (11) mit Scheiben (15 bzw. 12) verbunden sind zur drehfesten Verbindung mittels Rippen (30 und 29), die miteinander in Verbindung stehen über eine Platte (20), ein Blende (17) und einen Kugelanschlag (18), auf den ein in der zentralen Trennwand (5) vorgesehener Kolben (16) wirkt, wobei sich die Blende (17) auf einem äußeren Ring (19) abstützt, der durch einen Sicherungsring (23) gehalten wird; eine Zufuhrleitung (24) ist in der zentralen Trennwand (5) vorgesehen und mündet in der Kammer (25) des Kolbens (16).

4. Kupplungseinheit nach Anspruch 3, dadurch gekennzeichnet, daß die Glocke (14) die Welle (13) des Aufnahmeteils aufnimmt, mit dem sie über Rippen (31) verbunden ist und daß die Nabe (11) das Ende der Welle (13) mittels eines Nadellagers (26) trägt.

5. Kupplungseinheit nach Anspruch 2, dadurch gekennzeichnet, daß der Kupplungsflansch (10) eine Nabe (27) aufweist zur Aufnahme des Endes der Eingangswelle (8), mit der er über Rippen (32) drehfest verbunden ist, wobei der Flansch (10) durch eine zentrale Schraube (28) blockiert wird, die in das Ende der Eingangswelle (8) eingreift.

6. Kupplungseinheit nach Anspruch 1, dadurch gekennzeichnet, daß es eine Steuereinheit mit einem Steuerschaltkreis aufweist.

**Claims**

1. A coupling module in particular for a four-wheel drive motor vehicle comprising a clutch mechanism (3) with its hydraulic control characterised in that it comprises:
 – a hydraulic distribution system (2), and
 – a feed circuit connected to an external hydraulic pump,
the clutch mechanism (3), the hydraulic distribution system (2) and the feed circuit being mounted in an assembly of casings (1, 4) which are closed so as to form a whole, that is to say an independent mechanical unit which is mounted on the main casing (22) of the receiving unit.

2. A coupling module according to claim 1 characterised in that it is formed by a cylindrical casing (1) with a central partition (5) which is prolonged by a boss (7) at the motion take-off side so as to receive between said boss (7) and the external wall of the cylindrical casing (1) the hydraulic distribution system (2), the clutch mechanism (3) is disposed on the other side of the central partition (5) and is fixed with respect to an input shaft (8) supported by the boss (7) by means of a rolling bearing (9); the input shaft (8), at the motion take-off side, receiving a coupling flange (10) and, at the clutch mechanism (3) side, supporting the end of the shaft (13) of the receiving unit; the assembly of the coupling module is closed by a cover (4) which is centered and fixed on the cylindrical casing (1) by means of screws (21), said coupling module being centered and fixed on the casing (22) of the receiving unit.

3. A coupling module according to claim 2 characterised in that the clutch mechanism (3) with its hydraulic control is formed by a bell member (14) connected to the shaft (13) of the receiving unit and by a hub (11) which is fixed with respect to the input shaft (8), the bell member (14) and the hub (11) respectively having discs (15) and (12) to which they are connected for rotation therewith by means of splines (30) and (29) and which are applied against each other by means of a plate (20), a diaphragm (17) and a ball thrust bearing (18) on which acts the piston (16) which is mounted in the central partition (5), the diaphragm (17) bearing against an external ring (19) held by a circlip (23); and a feed duct (24) is provided in the central partition (5) and opens into the chamber (25) of the piston (16).

4. A coupling module according to claim 3 characterised in that the bell member (14) receives the shaft (13) of the receiving unit to which it is connected by means of splines (31) and that the hub (11) supports the end of said shaft (13) by means of a needle bearing (26).

5. A coupling module according to claim 2 characterised in that the coupling flange (10) has a hub (27) which receives the end of the input shaft (8) to which it is connected for rotation therewith by means of splines (32), the flange (10) being locked by a central screw (28) which is fixed in said end of the input shaft (8).

6. A coupling module according to claim 1 characterised in that it comprises a control device having a control logic means.

FIG_1